# EUROPÄISCHE PATENTSCHRIFT

(11) **EP 1 334 872 B1**
(45) Veröffentlichungstag und Bekanntmachung des Hinweises auf die Patenterteilung: **20.10.2004**
(21) Anmeldenummer: 02026997.3
(22) Anmeldetag: 05.12.2002
(51) Int. Cl.: B60R 1/072

(54) **Verstelleinrichtung, insbesondere für Kraftfahrzeugrückblickspiegel**
Adjustment device, particularly for vehicle rearview mirror
Dispositif de réglage, notamment pour un rétroviseur d'un véhicule

(30) Priorität: 17.12.2001 DE 10161975
(43) Veröffentlichungstag der Anmeldung: 13.08.2003
(73) Patentinhaber: EM Kunststofftechnik GmbH, 07806 Neustadt an der Orla (DE)
(72) Erfinder: Engelmann, R.Alfred, 07819 Weltwitz (DE); Swienty, Michael, 99423 Weimar (DE); Haubrich, Bernd, 07929 Saalburg (DE); Kunze, Ralf, 07745 Jena (DE)
(74) Vertreter: Kruspig, Volkmar, Dipl.-Ing.

(56) Entgegenhaltungen:
- EP-A- 0 528 418
- EP-A- 0 904 983
- DE-A- 3 804 137
- US-A- 4 824 232
- US-A- 5 993 018

## Beschreibung

Die Erfindung betrifft eine Verstelleinheit, insbesondere für Kfz-Rückblickspiegel gemäß Oberbegriff des Patentanspruchs 1. Eine solche Verstelleinheit ist aus der US-A-4,824,232 bekannt.

Elektromotorische Antriebsanordnungen zum gesteuerten mehrachsigen Verstellen, insbesondere eines Kraftfahrzeug-Rückblickspiegels sind bekannt. So zeigt beispielsweise die EP 1 063 125 A1 einen Stellantrieb für ein Kraftfahrzeug, wobei es dort darum geht, ein besonders hohes Verstellmoment und eine über die Lebensdauer möglichst konstante Reibkraft zu erreichen, wobei eine geringe Teileanzahl gegeben sein soll und Vorteile bei der Montage resultieren. Gemäß der dortigen Lehre soll zumindest ein Reibelement mit einem Verstellelement ein einstückiges Mittel bilden, welches als Verbindungselement wirkt. Durch die Anordnung von Reib-Verstellelementen an der Außenseite eines ersten Elements ist ein besonders hohes Verstellmoment möglich und es ergibt sich durch den großen Reibradius eine hohe Vibrationsdämpfung mit ebenfalls großer Haltekraft. Das vorgesehene Reib-Verstellelement besteht aus einem Metallband oder einem Verbundteil mit mindestens einem verzahnten Bereich, wobei die Verzahnung bevorzugt in das Metallband eingeprägt ist. Problematisch bei der vorbekannten Lösung ist, daß die Reibelemente nahezu ungeschützt im Außenbereich eines kugelkalottenförmigen Gehäuses angebracht sind und daß eine Handverstellung und damit ein Notbetrieb nur schwer möglich ist. Letztendlich ist die Teileanzahl im Sinne einer möglichst automatisierten Fertigung und der Kostenminimierung noch zu hoch.

Gemäß dem Stellantrieb zum Verschwenken eines Rückblickspiegels für Kraftfahrzeuge nach DE 199 09 233 A1 soll zur Verringerung des Bauraums anstelle von bekannten Flachankermotoren auf solche Antriebe zurückgegriffen werden, die eine geringe Drehzahl aufweisen und welche ohne mechanische Kommutierung betreibbar sind. Als Verstellelement wird eine Spindel, eine Zahnstange oder ein Zahnradsegment verwendet. Durch die geringe Drehzahl des gemäß dortiger Lehre eingesetzten Antriebsmotors wird außerdem die Geräuschbelastung reduziert. Das gegebene niedrige Untersetzungverhältnis eines dort vorgesehenen Getriebes soll es ermöglichen, den Spiegel manuell zu betätigen, ohne daß eine Rutsch- oder Rastkupplung vorgesehen ist.

Bei einer auf die Anmelderin zurückgehenden Standard-Spiegelverstelleinrichtung herkömmlicher Bauart werden in einer Unterschale eines mindestens zweiteiligen Gehäuses zwei Elektromotoren befestigt, die über jeweils einen Schneckenradantrieb verfügen. Die Schneckenräder kämmen mit einem schrägverzahnten Stirnrad. Im Inneren dieses Stirnrads ist ein Stößel aufgenommen, welcher an seinem unteren Ende einen Führungsfortsatz aufweist, der in eine langgestreckte, sich von der Unterschale nach unten orientierende Führungsnut eingreift. Ein separates Federteil aus Metall sorgt dafür, daß bei Erreichen eines Endanschlags ein Zurückspringen des Außengewindes des Stößels in einem Innengewinde des Stirnzahnrads möglich wird, um Beschädigungen auszuschließen. Ein zusätzliches ringförmiges Federteil sichert eine ausreichende Führung für die Stirnzahnräder in entsprechenden Ausnehmungen in der Ober- bzw. Unterschale des Gehäuses.

Die Oberschale der bekannten Verstelleinrichtung weist eine Öffnung auf, die jeweils eine Staubschutzkappe trägt, welche vom jeweiligen Stößel durchdrungen wird. Auch ein derartig ausgeführter Verstellantrieb besitzt noch eine zu hohe Teilezahl mit der Folge hoher Aufwendungen sowohl materialseitig als auch im Fertigungs- bzw. Montageprozeß.

Aus dem Vorgenannten ist es daher Aufgabe der Erfindung, eine weiterentwickelte Verstelleinheit, insbesondere für Kfz-Rückblickspiegel mit mindestens einem zweiteiligen Gehäuse aus Ober- und Unterschale anzugeben, wobei die Verstelleinheit flachbauend auszuführen ist und aus möglichst wenigen bewegten Teilen besteht. Alle für die Bewegungsumsetzung erforderlichen Baugruppen und Funktionen sollen über die Verstelleinheit realisiert werden, ohne daß die Rückblickspiegel oder die Spiegelaußengehäuse Teilfunktionen übernehmen müssen, so daß quasi eine Standard-Verstelleinheit für ganz unterschiedliche Typen und Anwendungen realisierbar ist.

Eine weitere Aufgabe der Erfindung besteht darin, eine den technischen Anforderungen im gegebenen Temperaturbereich genügende Dichtheit, insbesondere im Bereich der bewegten Stößel und der Oberschale zu gewährleisten, ohne daß Staubkappen oder dergleichen Mittel erforderlich werden.

Die Lösung der Aufgabe der Erfindung erfolgt mit einer Verstelleinheit nach den Merkmalen des Patentanspruchs 1, wobei die Unteransprüche mindestens zweckmäßige Ausgestaltungen und Weiterbildungen umfassen.

Die erfindungsgemäße Grundkonstruktion besteht nur noch aus drei bewegten Teilen, nämlich dem Schneckenradantrieb, einem an sich bekannten Stirnrad mit Schrägverzahnung sowie dem Stößel zum Betätigen der Spiegelbefestigungsplatte bzw. der Spiegelunterseite.
Der Stößel besitzt eine im wesentlichen oben geschlossene Hohlzylinderform, wobei der Außendurchmesser dieses Hohlzylinders auf den Innendurchmesser einer entsprechenden Ausnehmung oder Öffnung in der Oberschale des Gehäuses abgestimmt ist, d.h. eine Gleitbewegung durch diese Öffnung hindurch ausgeführt werden kann. Eine ansonsten erforderliche Staubkappe bei einem Außengewinde-Stößel ist nicht mehr notwendig, da zwischen der Außenseite des Hohlzylinders und der Innenseite der entsprechenden Öffnung quasi eine Labyrinth-Dichtung besteht.

Die Stirnzahnräder, die mit dem jeweiligen Schneckenrad auf der Abtriebsachse des Elektromotors kämmen, sind Bestandteil des Hohlzylinders. Hohlzylinder und Stirnrad können beispielsweise als einstückiges Kunststoff-Spritzteil ausgeführt sein. Weiterhin weist der Hohlzylinder ein Innengewinde auf.
Die Stößel, die wie vorerwähnt als mindestens einseitig offenes Zylinderteil ausgebildet sind, besitzen am unteren, offenen Ende außenumfangsseitig Federzungen. Die Federzungen wiederum weisen an ihren nachgiebigen Abschnitten mehrere Außengewindegänge auf, welche zum Innengewinde des Hohlzylinders komplementär sind.

Weiterhin sind im Inneren des Zylinderteils des Stößels mindestens zwei in Längsachsenrichtung sich erstreckende, gegenüberliegende Vorsprünge ausgebildet.

Die eigentliche Stößelführung ist als bolzenartiger, sich vom Boden der Unterschale erstreckender Fortsatz ausgeführt, welcher Führungsnuten für die Vorsprünge des Stößel-Zylinderteils aufweist.

Bei Betätigung des jeweiligen Elektromotors rotiert der Schneckenantrieb und es wird die Rotationsbewegung auf das Stirnzahnrad übertragen. Das Stirnzahnrad respektive der Hohlzylinder mit Innengewinde überträgt die Bewegung auf die Außengewindegänge an den Federzungen des Stößels. Der Stößel selber kann keine Drehbewegung ausführen, und zwar aufgrund der Vorsprünge im Inneren des Zylinderteils und der Führungsnuten am Fortsatz, der sich bolzenartig vom Boden der Unterschale erstreckt. Aufgrund dieser Tatsache führt der Stößel eine hin- und hergehende Bewegung, und zwar in Abhängigkeit von der Drehrichtung des Motors aus.

Kommt der Stößel in eine Anschlagposition, führt die Krafteinwirkung des Motors in Verbindung mit dem erreichten Anschlag zu einem Nachinnenbiegen der später beschriebenen Federzungen, wodurch die Außengewindegänge zumindest kurzzeitig nicht mehr in Eingriff mit dem Innengewinde des Hohlzylinders stehen. Hierdurch wird quasi eine Rutschkupplung gebildet.

In der Unterschale, die Stößelführung kreisringförmig umgebend, ist eine Erhebung ausgebildet, welche für das untere Ende des Hohlzylinders eine Aufnahme bzw. ein Gleitlager bildet.

Das untere Ende des Zylinderteils besitzt in Längsachsenrichtung sich erstreckende, im wesentlichen parallele Schlitze, wobei zwei jeweils eng benachbarte Schlitze eine Federzunge einschließen. Zwischen jeweils zwei weit benachbarten Schlitzen befindet sich der jeweilige Abschnitt mit dem im Inneren angeordneten Vorsprung zur Stößelführung.

Die Federzungen besitzen einen radial nach innen orientierten Nachgiebigkeitsbereich, wobei dieser gleich oder größer der Gewindetiefe der Außengewindegänge bzw. dem Innengewinde des Hohlzylinders ist.

In dem Fall, wenn es gilt, die momentane Verstellposition oder Lage des Spiegels bzw. der Spiegelbefestigungsplatte zu erfassen, ist es von Vorteil, wenn im Stößel oder in die Stößelführung integriert ein Linearpotentiometer angeordnet ist. Dieses Linearpotentiometer kann eine Keramikscheibe umfassen, welche mit einer Widerstandsmasse beschichtet ist. Ein Schleifer stellt dann eine Verbindung zu einem Gegenkontakt bzw. zu einer Gegenkontaktbahn her, wobei der Schleifer bevorzugt als bügelartiges Gebilde im Inneren des hohlzylindrischen Stößels befindlich ist.

Am geschlossenen Ende des Stößels ist eine Rastkugel angeformt, die mit einer entsprechenden Ausnehmung an der Unterseite der Befestigungsplatte des Spiegels in beweglicher Klemmverbindung steht.

Bevorzugt sind am Stößel drei um 180° oder vier um 90° versetzte Federzungen vorhanden.

Alternativ kann die Stößelführung aber auch über die vom Kreisrunden abweichende Gestaltung der Ausnehmung in der Oberschale mittels Formschluß realisiert werden, ohne den Grundgedanken der Erfindung zu verlassen.

Bei einer bevorzugten Ausführungsform ist die Stößelführung als Zapfen oder Bolzen mit einem sternförmigen Querschnitt gestaltet.

Das jeweilige obere Ende des Hohlzylinders mit Stirnzahnrad steht in Gleitanschlag mit einer jeweiligen Planfläche an der Innenseite der Oberschale. Irgendwelche weiteren Lager- oder Federelemente zur Führung des Stirnzahnrads sind nicht erforderlich.

In einer Ausgestaltung der Erfindung besitzt die Oberschale im Zentrum einen halbkugelförmigen, konkaven Rücksprung, wobei die Spiegelbefestigungsplatte einen hierzu korrespondierenden halbkugelförmigen konvexen Vorsprung umfaßt.

Zwischen Vor- und Rücksprung ist eine Kugelkalotte eingesetzt, welche an ihrer Außenseite einen Führungsfortsatz aufweist, der in einer Führungsnut im konkaven Rücksprung gleitet. Weiterhin weist die Kugelkalotte an ihrer Innenseite eine Innennut auf, in der ein Führungsfortsatz gleitet, welcher am konvexen Vorsprung angeformt ist oder einen Bestandteil dieses bildet.

Spiegelbefestigungsplatte, Kugelkalotte sowie Ober- und Unterschale werden mittels Kraftschluß durch einen zentralen Bolzen oder eine Schraube geführt und verbunden. Der Bolzen oder die Schraube nehmen eine Schraubenfeder auf, welche sich gegen ein Einsatzstück in der Spiegelbefestigungsplatte einerseits und den Bolzenoder Schraubenkopf andererseits abstützt.

Zusätzlich besteht die Möglichkeit, Ober- und Unterschale über Snap-In-Rastmittel zu verbinden.

Die Federzungen am Stößel weisen mindestens zwei, bevorzugt drei bis fünf Gewindegänge auf und bestehen wie mindestens auch die Hohlzylinder mit Schrägstirnzahnrad aus einem Kunststoffmaterial.

Die vorstehend beschriebene Verstelleinheit weist eine geringe Teileanzahl auf, wobei alle bewegten Teile kostengünstig aus einem Kunststoffmaterial in Spritzgußtechnik hergestellt werden können.

Durch die nach innen vom Boden der Unterschale sich nach oben erstreckenden Stößelführungen entfallen die bisher sich von der Unterseite des Gehäuses nach außen erstreckenden und damit störenden Aufnahmen für bekannte Stößel mit Führungsfortsatz und Außengewinde.

Die unmittelbare Anordnung eines Linearpotentiometers im Stößel bzw. am Führungsbolzen ermöglicht eine direkte Erfassung der jeweiligen Verstellposition, ohne daß weitere mechanische Mittel, z.B. ein Bewegungsübertragungs-Hebel oder dergleichen erforderlich werden.

Die Erfindung soll nachstehend anhand eines Ausführungsbeispiels sowie unter Zuhilfenahme von Figuren näher erläutert werden.

Hierbei zeigen:
- Fig. 1: eine Seitenansicht der kompletten Verstelleinheit;
- Fig. 2: eine Draufsicht der Verstelleinheit ohne Oberschale;
- Fig. 3: eine Schnittdarstellung längs B-B gemäß Fig. 2;
- Fig. 4: eine perspektivische Gesamtansicht der Verstelleinheit;
- Fig. 5: eine Draufsicht auf den Hohlzylinder mit Stirnzahnrad;
- Fig. 6: einen Schnitt A-A gemäß Fig. 5;
- Fig. 7: eine Seitenansicht des Stößels;
- Fig. 8: einen Schnitt längs A-A gemäß Fig. 7;
- Fig. 9: einen Schnitt B-B gemäß Fig. 8;
- Fig. 10: eine perspektivische Gesamtansicht des Stößels;
- Fig. 11: eine perspektivische Ansicht der unbestückten Unterschale und
- Fig. 12: einen Schnitt quer durch die Mittelachse der Unterschale mit erkennbarer Stößelführung.

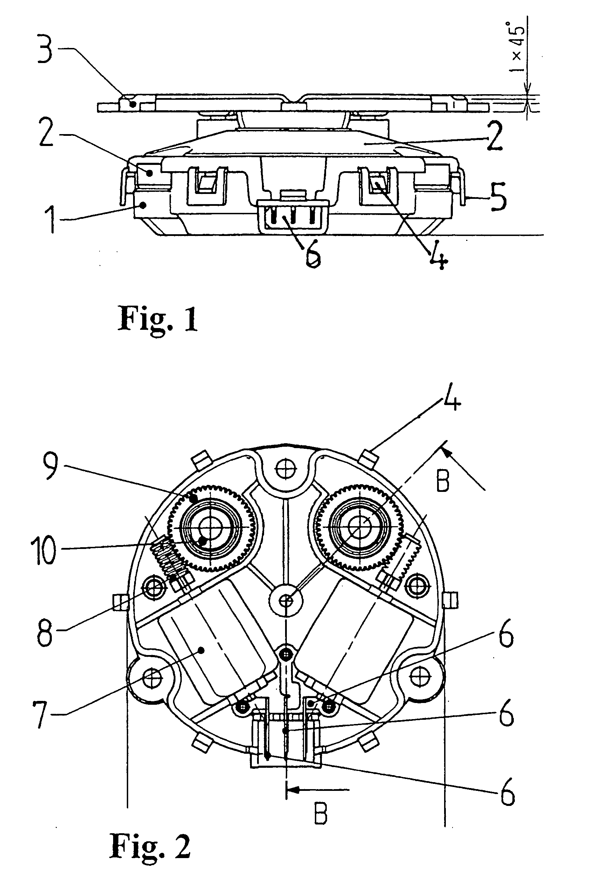

Für alle in der nachfolgenden Beschreibung des Ausführungsbeispiels verwendeten Teile werden dieselben Bezugszeichen verwendet.
Bei der Gesamtansicht der Verstelleinheit nach Fig. 1 ist die Unterschale 1, die Oberschale 2 sowie die Spiegelbefestigungsplatte 3 zu erkennen.

Beim Zusammenfügen von Unterschale 1 und Oberschale 2 ergeben sich Snap-in-Verbindungen zwischen den Rastnasen 4 und den Klemmhaken 5.

Elektrische Anschlußmittel 6 sind, wie in der Fig. 1 gezeigt, entweder seitlich oder aber auch nach unten orientiert.

Die Draufsicht ohne Oberschale nach Fig. 2 zeigt zwei Elektromotoren 7, die jeweils über einen Schneckenradantrieb 8 verfügen. Die Schneckenräder kämmen mit je einem Schräg-Stirnzahnrad 9, die Bestandteil eines Hohlzylinders sind.

Im Inneren der Hohlzylinder-Stirnzahnräder 9 befindet sich jeweils ein Stößel 10, welche die rotierende Bewegung in eine hin- und hergehende Bewegung, und zwar in Abhängigkeit von der Drehrichtung des jeweiligen Elektromotors 7 umwandeln.

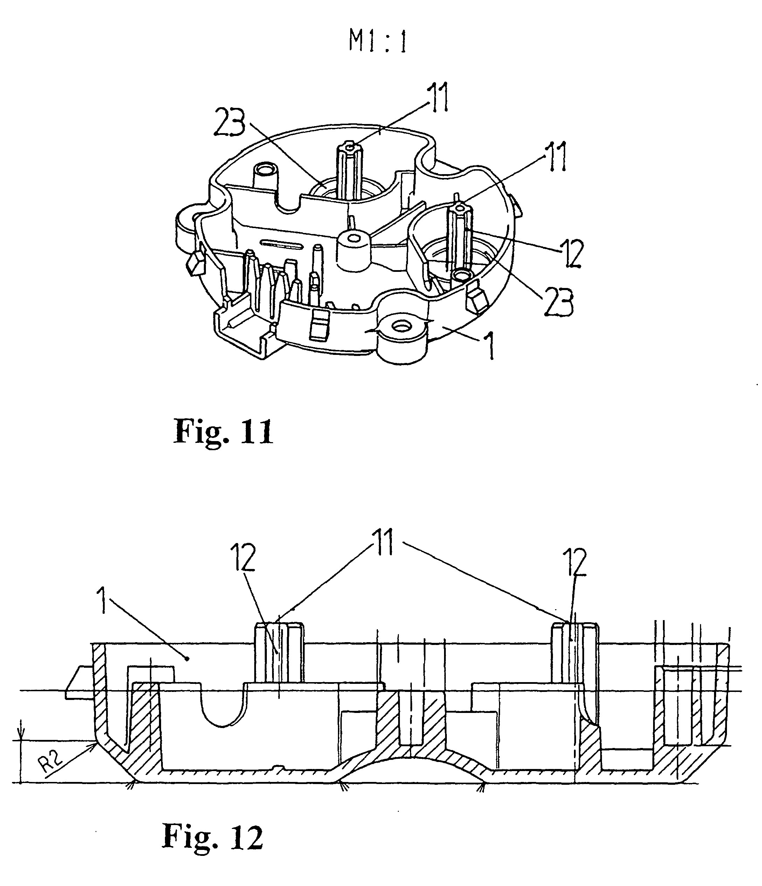

Die Unterschale 1 besitzt zur Stößelführung bolzenartige, sich vom Boden erstreckende Fortsätze 11, die wiederum Führungsnuten 12 (siehe z.B. Fig. 11) aufweisen.

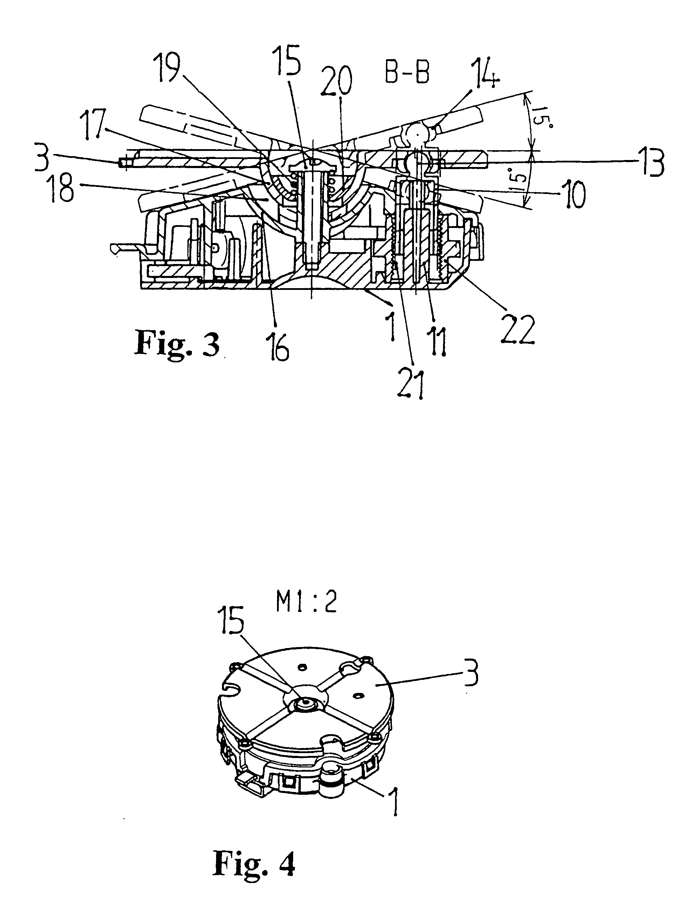

Verschiedene Verstellpositionen sind in der Fig. 3 durch entsprechende Stellungen der Spiegelbefestigungsplatte 3 dargestellt.

Das obere geschlossene Ende des Stößels 10 besitzt eine Rastkugel 13, die in eine entsprechende Rastausnehmung 14 der Spiegelbefestigungsplatte 3 eingreift.

Die Spiegelbefestigungsplatte 3 ist mit Hilfe einer Schraube 15, welche weiterhin die Oberschale durchdringt, an der Unterschale 1 verschwenkbeweglich befestigt.

Die Oberschale 2 besitzt in ihrem Zentrum einen halbkugelförmigen, konkaven Rücksprung 16, wobei die Spiegelbefestigungsplatte 3 einen hierzu korrespondierenden halbkugelförmigen konvexen Vorsprung 17 umfaßt.

Zwischen Vor- und Rücksprung 17, 16 ist ein Kugelkalottenteil 18 eingesetzt. Das Kugelkalottenteil 18 weist an seiner Außenseite einen Führungsfortsatz auf, der in einer Führungsnut im konkaven Rücksprung 16 gleitet. Weiterhin besitzt das Kugelkalottenteil an seiner Innenseite eine Innennut, in der ein Führungsfortsatz gleitet, welcher am konvexen Vorsprung 17 angeformt ist. Auf diese Weise ist sichergestellt, daß durch die geradlinigen Bewegungen zweier beabstandeter Stößel 10 nahezu jede beliebige Position im gegebenen Verstellbereich für den Spiegel bzw. die Spiegelbefestigungsplatte 3 eingestellt werden kann.

Die Schraube 15 nimmt eine Schraubenfeder 19 auf, welche sich gegen ein Einsatzstück 20 in der Spiegelbefestigungsplatte 3 einerseits und den Schraubenkopf andererseits abstützt.

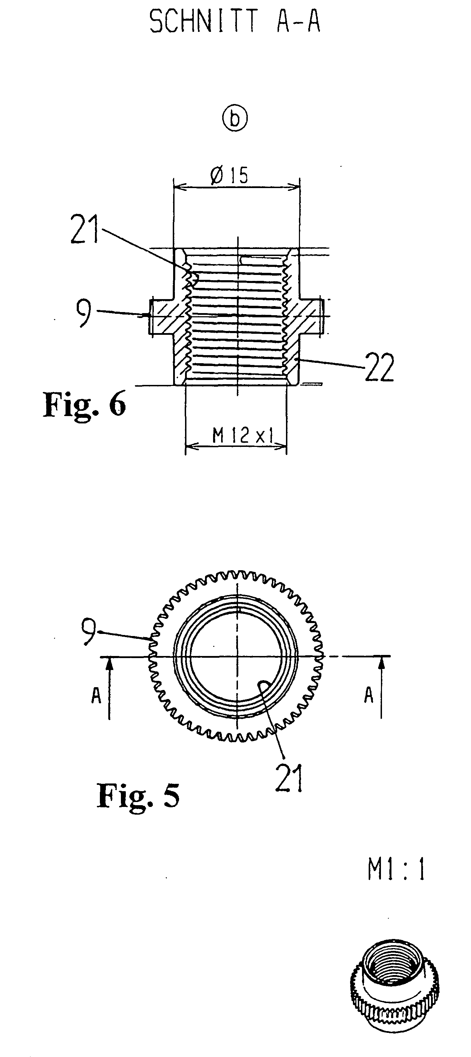

Fig. 5 läßt das Stirnzahnrad 9 mit Schrägverzahnung und die hohlzylindrische Ausbildung mit Innengewinde 21 erkennen. Der Hohlzylinder 22, welcher das Stirnzahnrad 9 trägt, weist ein oberes und ein unteres Ende auf. Das untere Ende des Hohlzylinders 22 ist in einer kreisringförmigen Erhebung 23 der Unterschale 1 geführt (siehe hierzu Fig. 11). Das obere Ende des Hohlzylinders 22 steht in Gleitanschlag mit einer jeweiligen Planfläche an der Innenseite der Oberschale 2.

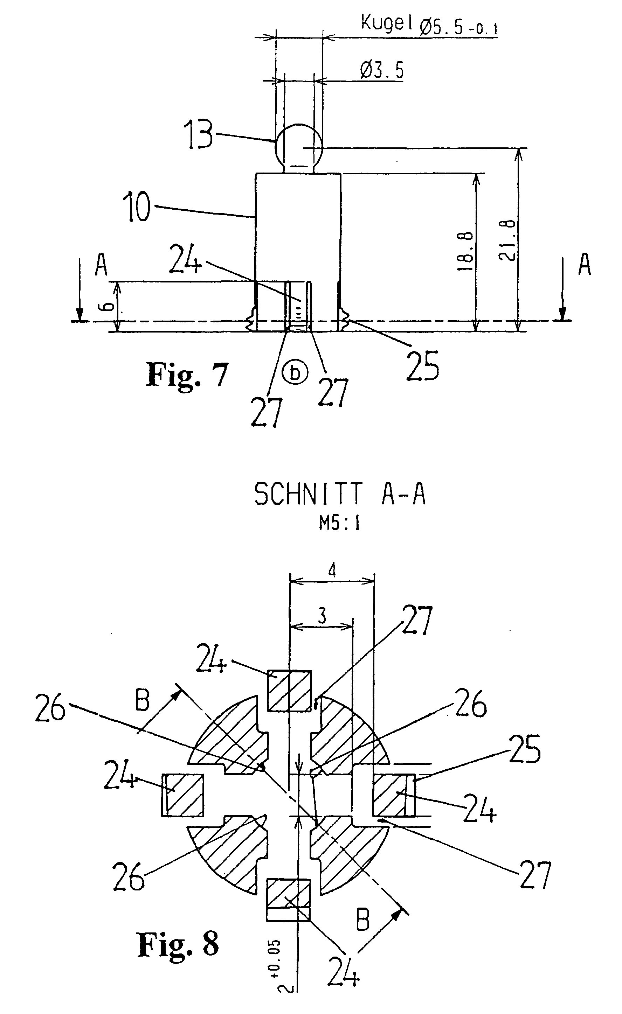

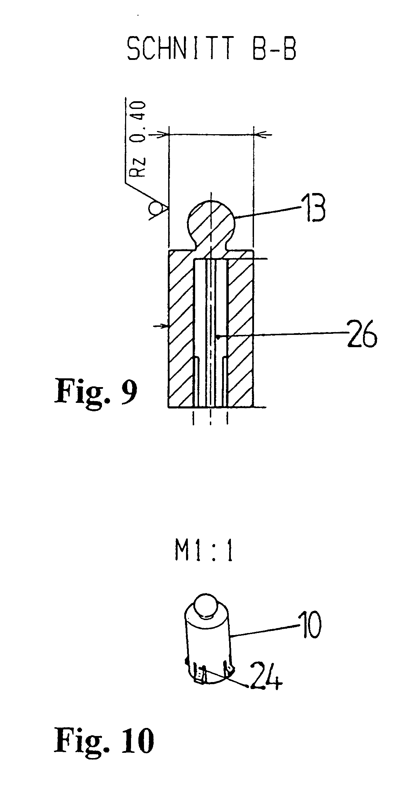

Die Fig. 7 bis 10 zeigen den erfindungsgemäßen Stößel 10 im Detail.

Der Stößel 10 besitzt am unteren offenen Ende außenumfangsseitig an seinem Zylinderteil Federzungen 24, wobei die Federzungen 24 an ihren nachgiebigen Abschnitten mehrere Außengewindegänge 25 besitzen, welche zum Innengewinde 21 des Hohlzylinders 22 komplementär sind.

Im Inneren des Zylinderteils des Stößels 10 sind beim gezeigten Beispiel vier in Längsachsenrichtung sich erstreckende, gegenüberliegende Vorsprünge 26 ausgebildet.

Diese Vorsprünge 26 greifen in die Führungsnuten 12 der Fortsätze 11 zur Stößelführung ein und ermöglichen eine geradlinige Bewegung des Stößels zur Verstellung der Spiegelbefestigungsplatte 3.

Die Außenumfangsfläche des Stößels 10 ist mit Ausnahme des Bereichs der Federzungen 24 mit den Außengewindegängen 25 glatt und nicht strukturiert. Stößeldurchführungsöffnungen in der Oberschale 2 besitzen einen auf den Außendurchmesser des Zylinderteils des Stößels 10 abgestimmten Durchmesser, so daß hier ein Gleitlager gebildet wird und die gewünschte Abdichtung zum Innenraum des Gehäuses ohne zusätzliche Mittel realisierbar ist.

Zur Bildung der Federzungen 24 besitzt das untere Ende des Zylinderteils des Stößels sich in Längsachsenrichtung erstreckende, im wesentlichen parallel verlaufende Schlitze 27, wobei zwei jeweils eng benachbarte Schlitze eine Federzunge 24 einschließen und zwischen jeweils zwei weit benachbarten Schlitzen sich der jeweilige Abschnitt mit den im Inneren angeordneten Vorsprüngen 26 befindet.

Fig. 8 macht deutlich, daß die Federzungen 24 über einen solchen freien Bewegungsbereich verfügen, daß der ansonsten bestehende Gewindeeingriff hin zum Innengewinde 21 des Hohlzylinders 22 nicht zerstörend überwunden werden kann, und zwar dann, wenn der Stößel in eine Endposition gelangt oder wenn per Handverstellung von außen mechanische Kräfte auf die Verstelleinheit wirken. Am Stößel 10 sind beim gezeigten Beispiel vier um 90° versetzte Federzungen 24 angeformt, wobei auch eine Mindestanzahl von drei, um 180° versetzte Federzungen 24 denkbar ist.

Die Fortsätze 11 für die Stößelführung besitzen die bereits erwähnten Führungsnuten 12, wobei in einer Ausgestaltung ein sternförmiger Querschnitt des bolzenartigen Fortsatzes 11 gewählt ist.

Die Anzahl der Außengewindegänge 25 beträgt mindestens zwei, bevorzugt drei bis fünf.

Aus den Fig. 7 bis 10 ist erkennbar, daß der Stößel 10 mit seinen Federzungen 24 einstückig, bevorzugt als POM-Kunststoff-Spritzteil gefertigt ist.

Die Ober- und Unterschalen, aber auch die Stirnzahnräder können ebenfalls aus Kunststoffmaterial bestehen.

### Bezugszeichenliste

- 1: Unterschale
- 2: Oberschale
- 3: Spiegelbefestigungsplatte
- 4: Rastnasen
- 5: Klemmhaken
- 6: elektrische Anschlußmittel
- 7: Elektromotoren
- 8: Schneckenradantrieb
- 9: Schräg-Stirnzahnrad
- 10: Stößel
- 11: Fortsätze zur Stößelführung
- 12: Führungsnuten der Fortsätze
- 13: Rastkugel
- 14: Rastausnehmung
- 15: Schraube
- 16: konkaver Rücksprung in der Oberschale
- 17: konvexer Vorsprung der Spiegelbefestigungsplatte
- 18: Kugelkalottenteil
- 19: Schraubenfeder
- 20: Einsatzstück
- 21: Innengewinde des Hohlzylinders
- 22: Hohlzylinder
- 23: kreisringförmige Erhebung in der Unterschale
- 24: Federzunge
- 25: Außengewindegänge
- 26: Vorsprünge im Inneren des Stößels
- 27: Schlitze am unteren offenen Ende des Stößels

## Patentansprüche

1. Verstelleinheit, insbesondere für Kraftfahrzeug-Rückblickspiegel, mit einem mindestens zweiteiligen Gehäuse aus Ober- und Unterschale (1, 2), zwei in der Unterschale (1) des Gehäuses befestigte Elektromotoren (7) mit je einem Schneckenradantrieb (8), welcher jeweils mit einem Zahnrad (9) in Wirkverbindung steht, zwei vom jeweiligen Zahnrad (9) angetriebene Stößel (10) zur Umwandlung der Drehbewegung in eine je nach Drehrichtung hin- oder hergehende geradlinige Bewegung, wobei die Stößel die Oberschale (2) durchdringen und mit ihrem Stößelende mit einer Platte (3) zum Befestigen des Spiegels oder mit der Spiegelunterseite in mechanischem Kontakt stehen, wobei
die mit dem jeweiligen Schneckenrad (8) kämmenden Zahnräder (9) Bestandteil eines Hohlzylinders (22) sind, wobei der Hohlzylinder ein Innengewinde (21) aufweist, die Stößel (10) als mindestens einseitig offenes Zylinderteil ausgebildet sind und der Außendurchmesser des Zylinderteils kleiner als der Innendurchmesser des Hohlzylinders (22) ist, so daß der Stößel in axialer Richtung im Hohlzylinder eine Bewegung ausführen kann,
am unteren, offenen Ende außenumfangsseitig am Zylinderteil (10) Federzungen (24) angebracht oder angeformt sind, wobei die Federzungen an ihren nachgiebigen Abschnitten mehrere Außengewindegänge (25) besitzen, welche zum Innengewinde (21) des Hohlzylinders (22) komplementär sind,
**dadurch gekennzeichnet, daß**
eine Stößelführung an oder in der Unterschale vorgesehen ist, wobei
im Inneren des Zylinderteils (10) mindestens zwei in Längsachsenrichtung sich erstreckende, gegenüberliegende Vorsprünge (26) ausgebildet sind und
die Stößelführung ein bolzenartiger, sich vom Boden der Unterschale (1) erstreckender Fortsatz (11) ist, welcher Führungsnuten (12) für die Vorsprünge (26) des Stößel-Zylinderteils (10) aufweist.

2. Verstelleinheit nach Anspruch 1,
**dadurch gekennzeichnet, daß**
in der Unterschale (1), die Stößelführung (11) kreisringförmig umgebend, eine Erhebung (23) ausgebildet ist, welche für das untere Ende des Hohlzylinders (22) eine Aufnahme bzw. ein Lager bildet.

3. Verstelleinheit nach Anspruch 1 oder 2,
**dadurch gekennzeichnet, daß**
die Stößeldurchführungsöffnungen in der Oberschale (2) einen auf den Außendurchmesser des Zylinderteils (10) zur Bildung eines Gleitlagers abgestimmten Durchmesser aufweisen.

4. Verstelleinheit nach einem der Ansprüche 1 bis 3,
**dadurch gekennzeichnet, daß**
das untere Ende des Zylinderteils (10) in Längsachsenrichtung sich erstreckende, im wesentlichen parallele Schlitze (27) besitzt, wobei zwei jeweils eng benachbarte Schlitze eine Federzunge (24) einschließen und zwischen jeweils zwei weit benachbarten Schlitzen sich der jeweilige Abschnitt mit dem im Inneren angeordneten Vorsprung (26) befindet.

5. Verstelleinheit nach einem der vorangegangenen Ansprüche,
**dadurch gekennzeichnet, daß**
die Federzungen (24) einen radial nach innen orientierten Nachgiebigkeitsbereich besitzen, wobei dieser gleich oder größer der Gewindetiefe der Außengewindegäng (25) ist.

6. Verstelleinheit nach einem der vorangegangenen Ansprüche,
**dadurch gekennzeichnet, daß**
der Stößel (10) oder die Stößelführung (11) ein integriertes Linearpotentiometer zur Erfassung der Stößelposition aufweist.

7. Verstelleinheit nach einem der vorangegangenen Ansprüche,
**dadurch gekennzeichnet, daß**
am geschlossenen Ende des Stößels eine Rastkugel (13) angeformt ist.

8. Verstelleinheit nach einem der vorangegangenen Ansprüche,
**dadurch gekennzeichnet, daß**
am Stößel (10) drei um 180° oder vier um 90° versetzte Federzungen (24) ausgebildet sind.

9. Verstelleinheit nach Anspruch 1,
**dadurch gekennzeichnet, daß**
die Stößelführung über eine entsprechend gestaltete Ausnehmung in der Oberschale (2) mittels Formschluß erfolgt.

10. Verstelleinheit nach Anspruch 1,
**dadurch gekennzeichnet, daß**
die Stößelführung (11) als Zapfen oder Bolzen mit einem sternförmigen Querschnitt ausgebildet ist.

11. Verstelleinheit nach einem der vorangegangenen Ansprüche,
**dadurch gekennzeichnet, daß**
das jeweilige obere Ende des Hohlzylinders (22) in Gleitanschlag mit einer jeweiligen Planfläche an der Innenseite der Oberschale (2) steht.

12. Verstelleinheit nach einem der vorangegangenen Ansprüche,
**dadurch gekennzeichnet, daß**
die Oberschale (2) im Zentrum einen halbkugelförmigen, konkaven Rücksprung (16) besitzt, wobei die Spiegelbefestigungsplatte (3) einen hierzu korrespondierenden halbkugelförmigen, konvexen Vorsprung (17) umfaßt.

13. Verstelleinheit nach Anspruch 12,
**dadurch gekennzeichnet, daß**
zwischen Vor- und Rücksprung (16, 17) eine Kugelkalotte (18) eingesetzt ist, welche an ihrer Außenseite einen Führungsfortsatz aufweist, der in einer Führungsnut im konkaven Rücksprung gleitet, und weiterhin an ihrer Innenseite eine Innennut aufweist, in der ein Führungsfortsatz gleitet, welcher am konvexen Vorsprung angeformt ist.

14. Verstelleinheit nach Anspruch 13,
**dadurch gekennzeichnet, daß**
Spiegelbefestigungsplatte (3), Kugelkalotte (18) sowie Ober- und Unterschale (1, 2) mittels Kraftschluß durch einen zentralen Bolzen oder Schraube (15) verbunden und fixiert sind, wobei der Bolzen oder die Schraube eine Schraubenfeder (19) aufnimmt, welche sich gegen ein Einsatzstück (20) in der Spiegelbefestigungsplatte (3) einerseits und den Bolzenoder Schraubenkopf andererseits abstützt.

15. Verstelleinheit nach Anspruch 14,
**dadurch gekennzeichnet, daß**
Ober- und Unterschale (1, 2) zusätzlich über Snap-In-Rastmittel verbunden sind.

16. Verstelleinheit nach einem der vorangegangenen Ansprüche,
**dadurch gekennzeichnet, daß**
die Federzungen (24) mindestens zwei, bevorzugt drei bis fünf Gewindegänge (25) aufweisen.

17. Verstelleinheit nach einem der vorangegangenen Ansprüche,
**dadurch gekennzeichnet, daß**
mindestens die Stößel (10) und die Hohlzylinder (22) mit Schräg-Stirnzahnrad (9) aus Kunststoffmaterial bestehen.

18. Verstelleinheit nach Anspruch 7,
**dadurch gekennzeichnet, daß**
die Rastkugel (13) des Stößels (10) in eine Rastausnehmung (14) an der Befestigungsplatten- oder Spiegelunterseite eingreift.

## Claims

1. An actuator unit, in particular for motor vehicle rearview mirrors, comprising an at least two-piece housing consisting of an upper and a lower shell (1, 2), two electric motors (7) attached in the lower shell (1) of the housing, with a worm drive (8) each, each of which being actively engaged with a gear (9), two tappets (10) driven by the respective gear (9) for the conversion of the rotary motion into a linear motion either to or fro, depending on the sense of rotation, with the tappets penetrating the upper shell (2) and with their tappet ends being in mechanical contact with a plate (3) for mounting the mirror or with the lower side of the mirror, with
the gears (9) meshing with the respective worm gear (8) being part of a hollow cylinder (22), the hollow cylinder comprising a female thread (21),
the tappets (10) being formed as a cylindrical part with at least one open side and with the outer diameter of the cylindrical part being smaller than the inner diameter of the hollow cylinder (22) so that the tappet is able to carry out a movement in the axial direction within the hollow cylinder,
spring tongues (24) being attached to or formed at the lower open end of the outer circumference of the cylindrical part (10), with the spring tongues having several male threads (25) at their resilient portions, which are complementary with the female thread (21) of the hollow cylinder (22),
**characterised in that**
a tappet guide is provided at or in the lower shell, with at least two opposite projections (26) being formed in the interior of the cylindrical part (10) and extending in the direction of the longitudinal axis, and
the tappet guide being a bolt-type extension (11) extending from the bottom of the lower shell (1), which comprises guiding grooves (12) for the projections (26) of the cylindrical tappet part (10).

2. The actuator unit according to Claim 1,
**characterised in that**
a raised element (23) is formed in the lower shell (1), circularly surrounding the tappet guide (11), which provides a support or a bearing, respectively, for the lower end of the hollow cylinder (22).

3. The actuator unit according to Claim 1 or 2,
**characterised in that**
the tappet throughholes in the upper shell (2) have a diameter which is adapted to the outer diameter of the cylindrical part (10) in order to form a friction bearing.

4. The actuator unit according to one of Claims 1 to 3,
**characterised in that**
the lower end of the cylindrical part (10) has essentially parallel slots (27) extending in the longitudinal direction, with two closely spaced neighbouring slots each enclosing a spring tongue (24), and with the respective portion with the projection (26) arranged in the interior being disposed between each widely spaced neighbouring slots.

5. The actuator unit according to one of the previous claims,
**characterised in that**
the spring tongues (24) have a radially inwardly oriented resilient area which is equal to or greater than the thread depth of the male threads (25).

6. The actuator unit according to one of the previous claims,
**characterised in that**
the tappet (10) or the tappet guide (11) comprises an integrated linear potentiometer for sensing the tappet position.

7. The actuator unit according to one of the previous claims,
**characterised in that**
a detent ball (13) is formed at the closed end of the tappet.

8. The actuator unit according to one of the previous claims,
**characterised in that**
three spring tongues (24) offset by 120° or four spring tongues offset by 90° are formed at the tappet (10).

9. The actuator unit according to Claim 1,
**characterised in that**
the tappet guide is effected via a correspondingly shaped recess in the upper shell (2) by means of a positive engagement.

10. The actuator unit according to Claim 1,
**characterised in that**
the tappet guide (11) is formed as a pin or bolt with a star-shaped cross-section.

11. The actuator unit according to one of the previous claims,
**characterised in that**
the respective upper end of the hollow cylinder (22) is in sliding abutment with a respective planar face at the inside of the upper shell (2).

12. The actuator unit according to one of the previous claims,
**characterised in that**
the centre of the upper shell (2) is provided with a semi-spherical concave recess (16), with the mirror mounting plate (3) comprising a corresponding semi-spherical convex projection (17).

13. The actuator unit according to Claim 12,
**characterised in that**
a universal ball joint (18) is inserted between the projection and the recess (16, 17), which comprises a guide extension at its outside, which slides in a guide groove in the concave recess, and further comprises an inner groove at its inside in which a guide extension slides which is formed at the convex projection.

14. The actuator unit according to Claim 13,
**characterised in that**
mirror mounting plate (3), universal ball joint (18) as well as upper and lower shell (1, 2) are connected and fixed by means of a non-positive connection with a central bolt or screw (15), with the bolt or the screw carrying a helical spring (19) which bears against an insert piece (20) in the mirror mounting plate (3), on the one hand, and against the bolt or screw head, on the other hand.

15. The actuator unit according to Claim 14,
**characterised in that**
upper and lower shell (1, 2) are additionally connected via snap-in detent means.

16. The actuator unit according to one of the previous claims,
**characterised in that**
the spring tongues (24) comprise at least two, preferably three to five threads (25).

17. The actuator unit according to one of the previous claims,
**characterised in that**
at least the tappets (10) and the hollow cylinders (22) with a helical gear (9) consist of synthetic material.

18. The actuator unit according to Claim 7,
**characterised in that**
the detent ball (13) of the tappet (10) engages a detent recess (14) at the mounting plate or the lower side of the mirror.

## Revendications

1. Ensemble de réglage, en particulier pour un rétroviseur de véhicule automobile, comportant un boîtier au moins en deux pièces constitué de coques supérieure et inférieure (1, 2), deux moteurs électriques (7) fixés dans la coque inférieure (1) du boîtier et pourvus chacun d'un entraînement à vis sans fin (8) et chacun en liaison d'action avec un engrenage (9), deux poussoirs (10) entraînés par l'engrenage respectif (9) pour convertir le mouvement de rotation en un mouvement rectiligne en va-et-vient, en fonction de la direction de rotation, les poussoirs traversant la coque supérieure (2) et étant en contact mécanique par leur extrémité de poussoir avec une plaque (3) de fixation du rétroviseur ou avec la face inférieure du rétroviseur, les engrenages (9) en engrènement avec la vis sans fin respective (8) faisant partie d'un cylindre creux (22), le cylindre creux présentant un taraudage intérieur (21), les poussoirs (10) étant réalisés sous forme de partie cylindrique ouverte sur au moins un côté et le diamètre extérieur de la partie cylindrique étant inférieur au diamètre intérieur du cylindre creux (22), de sorte que le poussoir peut exécuter un mouvement en direction axiale dans le cylindre creux, des languettes élastiques (24) étant agencées ou conformées, à l'extrémité inférieure ouverte, du côté périphérie extérieure sur la partie cylindrique (10), les languettes élastiques possédant sur leurs tronçons souples plusieurs spires de filetage extérieur (25) qui sont complémentaires au taraudage intérieur (21) du cylindre creux (22), **caractérisé en ce qu'**il est prévu un guidage de poussoir sur ou dans la coque inférieure, au moins deux saillies opposées (26) s'étendant en direction de l'axe longitudinal étant réalisées à l'intérieur de la partie cylindrique (10) et le guidage de poussoir étant un prolongement (11) en forme de goujon qui s'étend depuis le fond de la coque inférieure (1) et qui présente des gorges de guidage (12) pour les saillies (26) de la partie cylindrique de poussoir (10).

2. Ensemble de réglage selon la revendication 1, **caractérisé en ce qu'**il est prévu un bossage (23) réalisé dans la coque inférieure (1) en entourant en forme d'anneau de cercle le guidage de poussoir (11), bossage qui forme un logement ou un palier pour l'extrémité inférieure du cylindre creux (22).

3. Ensemble de réglage selon l'une ou l'autre des revendications 1 et 2, **caractérisé en ce que** les ouvertures de passage de poussoir dans la coque supérieure (2) présentent un diamètre qui est adapté au diamètre extérieur de la partie cylindrique (10) pour former un palier à glissement.

4. Ensemble de réglage selon l'une des revendications 1 à 3, **caractérisé en ce que** l'extrémité inférieure de la partie cylindrique (10) possède des fentes sensiblement parallèles (27) s'étendent en direction de l'axe longitudinal, deux fentes respectives étroitement voisines entourant une languette élastique (24), et **en ce que** le tronçon respectif comportant la saillie (26) agencée à l'intérieur se trouve entre deux fentes voisines à grande distance.

5. Ensemble de réglage selon l'une des revendications précédentes, **caractérisé en ce que** les languettes élastiques (24) possèdent une zone de souplesse orientée radialement vers l'intérieur qui est égale ou supérieure à la profondeur des spires de filetage extérieur (25).

6. Ensemble de réglage selon l'une des revendications précédentes, **caractérisé en ce que** le poussoir (10) ou le guidage de poussoir (11) comprend un potentiomètre linéaire intégré pour détecter la position du poussoir.

7. Ensemble de réglage selon l'une des revendications précédentes, **caractérisé en ce qu'**une bille d'enclenchement (13) est conformée à l'extrémité fermée du poussoir.

8. Ensemble de réglage selon l'une des revendications précédentes, **caractérisé en ce qu'**il est prévu sur le poussoir (10) trois languettes élastiques (24) décalées de 180° ou quatre languettes élastiques (24) décalées de 90°.

9. Ensemble de réglage selon la revendication 1, **caractérisé en ce que** le guidage de poussoir s'effectue par coopération de formes au moyen d'un évidement réalisé en correspondance dans la coque supérieure (2).

10. Ensemble de réglage selon la revendication 1, **caractérisé en ce que** le guidage de poussoir (11) est réalisé sous forme de tenon ou de goujon présentant une section transversale en forme d'étoile.

11. Ensemble de réglage selon l'une des revendications précédentes, **caractérisé en ce que** l'extrémité supérieure respective du cylindre creux (22) est en butée de glissement avec une surface plane respective contre le côté intérieur de la coque supérieure (2).

12. Ensemble de réglage selon l'une des revendications précédentes, **caractérisé en ce que** la coque supérieure (2) possède au centre un retrait concave hémisphérique (16), la plaque de fixation de rétroviseur (3) comprenant une saillie convexe hémisphérique (17) correspondante à celui-ci.

13. Ensemble de réglage selon la revendication 12, **caractérisé en ce qu'**une calotte sphérique (18) est mise en place entre la saillie et le retrait (16, 17), qui présente sur son côté extérieur un prolongement de guidage qui glisse dans une gorge de guidage dans le retrait concave, et qui présente sur son côté intérieur une gorge intérieure dans laquelle glisse un prolongement de guidage qui est conformé sur la saillie convexe.

14. Ensemble de réglage selon la revendication 13, **caractérisé en ce que** la plaque de fixation de rétroviseur (3), la calotte sphérique (18) ainsi que les coques supérieure et inférieure (1, 2) sont reliées et fixées par coopération de forces au moyen d'un boulon ou d'une vis central(e) (15), le boulon ou la vis recevant un ressort hélicoïdal (19) qui prend appui contre un insert (20) dans la plaque de fixation de rétroviseur (3) d'une part et contre la tête de boulon ou de vis d'autre part.

15. Ensemble de réglage selon la revendication 14, **caractérisé en ce que** les coques supérieure et inférieure (1, 2) sont reliées en supplément via des moyens à encliquetage.

16. Ensemble de réglage selon l'une des revendications précédentes, **caractérisé en ce que** les languettes élastiques (24) présentent au moins deux, de préférence trois à cinq spires (25).

17. Ensemble de réglage selon l'une des revendications précédentes, **caractérisé en ce qu'**au moins les poussoirs (10) et les cylindres creux (22) avec l'engrenage hélicoïdal (9) sont constitués en matière plastique.

18. Ensemble de réglage selon la revendication 7, **caractérisé en ce que** la bille d'enclenchement (13) du poussoir (10) s'engage dans un évidement d'enclenchement (14) sur la face inférieure de la plaque de fixation ou du rétroviseur.
